# EUROPEAN PATENT SPECIFICATION

(11) **EP 1 250 837 B1**
(45) Date of publication and mention of the grant of the patent: **16.01.2008**
(21) Application number: 02076477.5
(22) Date of filing: 16.04.2002
(51) Int. Cl.: A01K 5/02, A01K 5/01, A01K 1/12

(54) **A device for supplying feed to animals**
Einrichtung zum Zuführen von Nahrungsmittel für Tiere
Dispositif pour la distribution de nourriture à des animaux

(30) Priority: 20.04.2001 NL 1017887
(43) Date of publication of application: 23.10.2002
(73) Proprietor: Lely Enterprises AG, 6300 ZUG (CH)
(72) Inventor: Van den Berg, Karel, 2971 BR Bleskensgraaf (NL); Sie, Howard, 3037 VC Rotterdam (NL); Voogd, Licen Eliza Niels, 4143 HG Leerdam (NL); Van der Lely, Alexander, 3065 NA Rotterdam (NL)
(74) Representative: Corten, Maurice Jean F.M.

(56) References cited:
- WO-A-00/38504
- WO-A-01/17340
- DE-C- 927 302
- FR-A- 2 686 218
- NL-C- 1 010 898
- US-A- 3 336 907
- US-A- 4 006 712
- US-A- 5 553 569

## Description

The invention relates to a device for supplying feed to animals, such as cows, said device being provided with a feeding trough which is accessible to an animal, with a bottom having a floor portion on which an animal can stand, and with identification means for identifying an individual animal, the distance between the feeding trough and the floor portion being adjustable.

Such a device is known from European patent application EP-A-0951823. In this known device the feeding trough is located above a channel for roughage. When the channel is filled with roughage, the feeding trough is temporarily moved vertically upwards. Although this known device functions satisfactorily in practice, in some cases the feed intake by an animal appears not to be optimal. A further device is known from US 5,553,569, which describes an animal stall in which a forward floor part is fixable higher than a rear floor part in order that the animal adopts a posture that improves access for milking. According to the document, a manger may be moved forwardly and rearwardly and a transition point between the forward floor part and the rearward floor part may be varied in response to identification of the animal presented for milking.

It is an object of the invention to obviate the drawbacks of the prior art at least partially.

For that purpose, according to a first aspect of the invention, a device for supplying feed to animals of the above-described type comprises the measures according to the characterizing part of claim 1. The invention is based on the insight that, due to the fact that animals have different heights, in the known device the feed intake is negatively influenced by the fixed arrangement of the feeding troughs. According to the invention, animals having different heights can obtain access to a feeding trough in a simple manner because of the fact that with the aid of the identification means the identity of an animal can be established. When the identity has been established, the distance between feeding trough and floor portion corresponding with that animal, e.g. for an optimal feed intake, can be adjusted automatically.

Although the feeding trough may be mounted on the device so as to be adjustable in height, it is also possible to make the floor portion adjustable in height.

The invention may also be applied when the floor portion does not constitute part of the device. Thus the invention also relates to a device according to claim 2.

To achieve the above-mentioned aim, according to a second aspect of the invention, the device for supplying feed to animals of the above-described type may comprise an animal height measuring means which may e.g. be constituted by a camera, or a light grid, in which situation the measuring means are disposed e.g. in the partition. The height of the feeding trough is preferably adjusted with the aid of data from the animal height measuring means. With the aid of the animal height measuring means it is inter alia possible to establish the growth of an animal and/or to attune the supply of fodder and/or drink, possibly in combination with an animal recognition device (or identification device). When an animal is grown up and does not grow any more, an animal recognition device (or identification device) may be used to find out, by way of the identity, the height of the animal. For that purpose a memory comprises a table containing the height per animal.

According to a further aspect of the invention, a device for supplying feed to animals of the above-described type is provided with adjusting means for adjusting the orientation of the floor portion relative to the bottom, and with means for locking the floor portion in an adjusted position. It has appeared that each animal has not only an optimal feed intake at a certain height of the feeding trough relative to the floor portion, but also when the floor portion assumes an orientation corresponding with that animal. For example, one animal may prefer to lean forwards for taking feed, while another animal on the contrary prefers to lean backwards or sidewards. The adjusting means are preferably integrated into the floor portion. It is especially advantageous when the adjusting means are controlled with the aid of data from the identification means.

In an embodiment of a device according to the invention the device comprises a hopper and a first conveyor for conveying feed to the feeding trough, the first conveyor conveying feed upwards. Due to the fact that the first conveyor conveys the feed upwards, there appears to be obtained a highly accurate metering as well as a quick supply of the feed.

Although the feed may be conveyed directly from the first conveyor to the feeding trough, it is advantageous, inter alia for reasons of mixing feed, when the device is provided with a receptacle, the first conveyor conveying an amount of feed from the hopper to the receptacle.

An embodiment of a device according to the invention is characterized in that the receptacle is provided with a weighing device for measuring feed present in the receptacle. Thus it is possible to establish the amount of feed that can be supplied to the feeding trough. Thus it is also possible to realise an accurate composition of the mixture.

Although the feed may be taken out of the receptacle by means of a separate taking-out device, for the sake of simplicity of the construction it is advantageous when there is not used a separate device for taking out. There may be used a tiltable receptacle, feed falling from said receptacle after the latter has been tilted. However, for improving the hygienic use of the device, the receptacle has preferably a bottom which is adapted to be opened. There is preferably provided a control means for controlling the opening of the bottom.

Although the amount of feed may be conveyed directly from the receptacle to the feeding trough, it is constructionally advantageous when the conveying means comprise a second conveyor for conveying the amount of feed from the receptacle to the feeding trough.

In a preferred embodiment the second conveyor is constituted by a tube-shaped chute respectively a channel-shaped chute, in other words, the receptacle is located above the feeding trough. As a result thereof, there is no separate drive mechanism required for conveying the feed, because the gravitational force causes the feed to flow to the feeding trough.

A device according to the invention may be applied inter alia to milking robots. However, the invention is especially advantageous when the device is constituted by a feeding column, in which situation several animals can make use of the device at the same time. For that purpose the feeding column is provided in a manner known per se with several feeding troughs that may be disposed for example side by side.

A compact device is obtained when the feeding column is provided with a framework located around the central axis, to which framework substantially the feeding troughs and hoppers are fitted.

For the purpose of obtaining a compact device each hopper has a discharge end, a discharge end corresponding with the relevant supply end of the first conveyor. A particularly compact construction is obtained when the discharge ends of the hoppers alternately stagger in height, the arrangement being such that the discharge ends of juxtaposed hoppers partially overlap each other in a projective view. The device is preferably provided with a plurality of feeding troughs disposed on a framework located around a central axis.

When a first number of the feeding troughs are disposed on the framework in a lower position than a second number of the feeding troughs, a large number of feeding troughs may be provided within a limited space when in a projective view there is an overlap between the feeding troughs of the first and the second number. In the latter case the conveyance of feed to the first number of feeding troughs is simplified when above at least one of the feeding troughs of the first number there is provided a third conveyor for conveying feed from the second conveyor to the feeding trough.

The third conveyor is preferably disposed so as to be rotatable around the central axis, so that a small number of third conveyors, preferably one, will suffice.

The second conveyor is preferably disposed so as to be rotatable around the central axis, so that a small number of second conveyors, preferably one, will suffice.

In a preferred embodiment the third conveyor is constituted by a tube-shaped chute respectively a channel-shaped chute, in other words the receptacle is located above the feeding trough. As a result thereof there is not required a separate drive mechanism for conveying the feed, the gravitational force causing the feed to flow towards the feeding trough.

To prevent an animal from being disturbed by another animal during eating from a feeding trough, there is disposed a partition between two adjacent feeding troughs.

Because animals come in the immediate vicinity of the partition, it is highly appropriate when a reading device for a step counter is disposed in the partition. Such step counters are used inter alia for measuring whether or not an animal is on heat on the basis of the number of steps.

To prevent animals standing side by side from leaning too much against each other, an embodiment of a device according to the invention is provided with at least one partition frame extending from a feeding trough over a distance that equals at least approximately half of the average length of an animal. The partition frame is preferably made of stainless steel.

The eating behaviour of animals appears to be influenced positively when the feeding trough has an entrance opening for the head of an animal, the feeding trough having a shape that widens from the entrance opening. Although, in particular when several feeding troughs are disposed around a central axis, this seems illogical on first thoughts because the space available for feeding troughs on the contrary decreases towards the axis, this shape appears to have enormous, unexpected advantages in relation to the feed intake of animals.

To make the feeding troughs recognisable for animals, even in the situation of a small quantity of environmental light, the device is provided with a lighting disposed behind a feeding trough. There is preferably provided one central lighting for all feeding troughs.

The device is preferably provided with means for combating vermin. In this connection may be taken into consideration ventilators for chasing away flies or other insects; loudspeakers for chasing away mice and the like.

Both the hygiene and the storage life of the feed are improved when the device is provided with means for preventing the formation of condensation in the device. Such means may comprise a ventilator and/or heating and/or air conditioning.

To be able also to promote the feed intake of animals even at high temperatures and/or high atmospheric humidity, it is advantageous when the device is provided with means for cooling an animal.

When the device is used for dairy animals it is advantageous when the device is provided with means for giving the animal a signal indicating that the animal is expected at a milking robot. After a certain period of training this signal results in that a dairy animal goes to a milking robot of its own will. This may be promoted by closing the feeding trough and by offering the animal only feed in the milk box. It will be obvious that such signals indicating that a dairy animal is expected at a milking robot may also be issued at other places in a shed or the like where an animal may be present.

To prevent excrement from flowing in a direction towards the device, it is advantageous when the bottom slopes downwards in a direction away from the device. This appears also to give the animals a pleasant sensation. Additionally or alternatively the bottom has a raised floor portion on which the animal can stand.

Consequently, according to a fourth aspect, the invention relates to an assembly of a device for supplying feed to animals, such as cows, said device being provided with a feeding trough which is accessible to an animal, and with identification means for identifying an individual animal, and with a bottom having a floor portion on which an animal can stand for making use of the device, the distance between the feeding trough and the floor portion being adjustable, characterized in that the floor portion slopes obliquely downwards away from the device. This ensures that an animal stands less often in excrement during eating. Alternatively or additionally the floor portion is located above the bottom.

In order to obtain alternative or additional data about the growth and/or health of an animal, the device is provided with an animal weighing means. The animal weighing means is preferably integrated into the floor portion. For that purpose a weighing floor known per se may be used.

An embodiment of a device according to the invention, said device being provided with a feed metering device, said feed metering device supplying feed in metered portions with the aid of data from an animal identification device and feeding data stored in a computer, is characterized in that the animal weighing means respectively the animal height measuring means comprises a data conveying means for conveying measurement data to the computer, and in that the computer is provided with a memory containing average growth data for the relevant animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data. In this manner the amount of feed can be adapted during the growth of the animal on the basis of measured and historical data, in particular after comparison with the average growth data of the animal species.

The invention will now be explained in further detail with reference to an embodiment shown in the drawing.

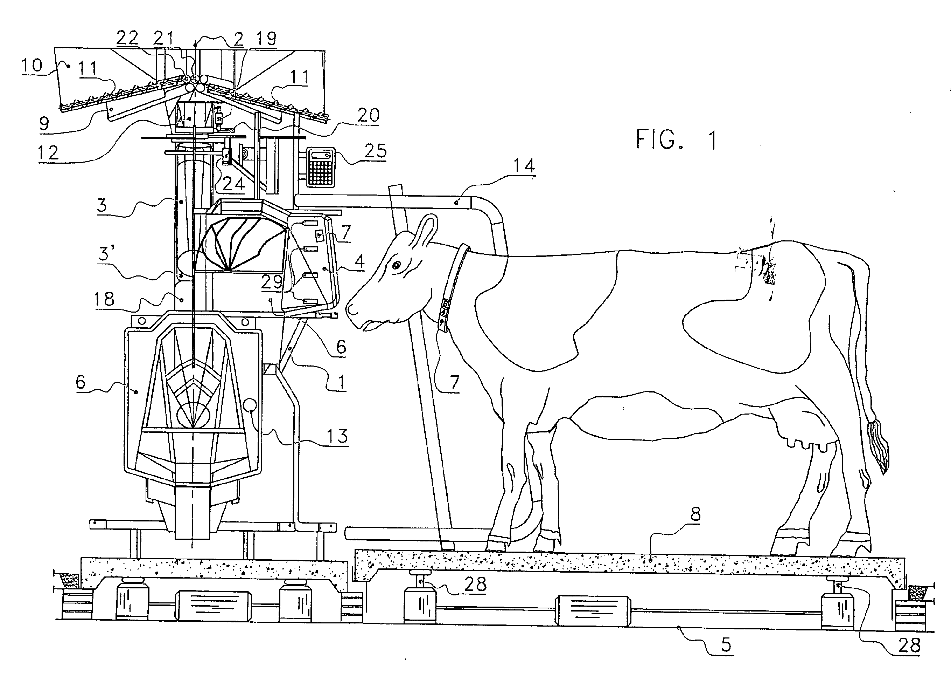

Figure 1 is a partially cut-away, schematic side view of an embodiment of a device according to the invention.

Figure 1 shows schematically a device for supplying feed to animals, in particular but not exclusively cows. The device comprises a framework 1 which, in the embodiment depicted in Figure 1, is disposed around a central axis 2 and has a substantially circular circumference. At the upper side of the framework 1 there are located hoppers 9, 10. For the installation of the hoppers 9, 10 there are made not further shown provisions on the framework 1. The device is adapted to be placed in a position, in other words can be positioned, on a bottom 5, preferably having a floor portion 8, on which an animal can stand.

The framework 1 is preferably provided with partitions 4 between adjacent feeding troughs 6. The partitions 4 are possibly detachably disposed on the framework 1. The partitions prevent an animal from being disturbed by another animal during eating from a feeding trough. Because cows eating from a feeding trough 6 come in the immediate vicinity of the partition 4, there is provided a reading device 13 in the partition 4 for reading the data in a step counter fitted to the cows. Such step counters are used inter alia for measuring on the basis of the number of steps whether or not an animal is on heat.

Partition frames 14 (one of which is shown in Figure 1) extend from the device over a distance that equals at least approximately half of the average length of a cow. The partition frame is preferably made of stainless steel, although other materials such as synthetic material may be applied as well. The partition frames 14 prevent animals standing side by side from leaning too much against each other.

In the embodiment shown feeding troughs 6 for the animals are disposed in circular arrangement around the axis 2 in the lower part of the device. By means of the geometry of the device, in the embodiment shown constituted by a feeding column, it is achieved that the construction occupies little space, while the accessibility of the feeding column to the animals is optimal from all directions. For the sake of compactness a first number Qf the feeding troughs 6 are disposed on the framework in a lower position than a second number of the feeding troughs 6. As is apparent from Figure 1, the feeding troughs of the first number overlap the feeding troughs of the second number in a projective view.

The feeding column is further provided with conveying means comprising a first conveyor 11 and a second conveyor 3, 3' for conveying feed from the hopper 9 respectively 10 to the relevant feeding trough 6. A receptacle 12 receives an amount of feed which is conveyed by the first conveyor 11 from the hopper 9, 10 to the receptacle 12. As a first conveyor 11, an auger, gripper, belt conveyor or any other device known per se for conveying feed may be used. The first conveyors 11 convey feed from a hopper 9, 10 upwards for obtaining a highly accurate metering. The first conveyors 11 have supply ends corresponding with the discharge ends 21 respectively 22 of the hoppers 9 respectively 10. In the embodiment shown the hoppers 9, 10 are disposed around the central axis 2. The discharge ends 21 and 22 of the hoppers 9, 10 alternately stagger in height, the arrangement being such that the discharge ends of juxtaposed hoppers 9, 10 partially overlap each other in a projective view, as is apparent from Figure 1.

A second conveyor 3, 3', preferably constituted by a tube-shaped chute respectively a channel-shaped chute, is suitable for conveying the amount of feed from the receptacle 12 to the relevant feeding trough 6. Above the feeding troughs 6 of the first number, so the lower feeding troughs 6, there is provided a third conveyor 18, preferably constituted by a tube-shaped chute respectively a channel-shaped chute, for conveying feed from the second conveyor 3, 3' to the feeding trough 6. Although there may be provided a separate third conveyor 18 per feeding trough 6 of the first number, the third conveyor 18 is preferably disposed so as to be rotatable around the central axis 2. The rotation is effected by a drive member 24, e.g. constituted by an electric motor.

In an analogous manner the second conveyor 3, 3' is disposed so as to be rotatable around the central axis 2; this rotation may be driven by a motor 24. Moreover, the second conveyor 3, 3' is movable from a position in which the feeding troughs of the second number can be filled to a position in which the feeding troughs of the first number can be filled.

For conveying the feed to the tube-shaped chute 3, 3', the receptacle 12 has a bottom which is adapted to be opened. This may be realised in that the bottom of the receptacle 12 is constituted by two halves which are pivotable about an axis 15. When the halves move away from each other, there is thus created an aperture through which the feed falls into the tube-shaped chute 3, 3'.

The device comprises a drive member 19 for controlling the opening of the bottom. The drive member 19 is controlled by a computer 25 which also controls the order of functioning of the first and second conveyors 11 respectively 3, 3'.

The receptacle 12 is provided with a weighing device 20 known per se for measuring feed present in the receptacle 12. The weighing device 20 may be a load cell on which the receptacle 12 bears via e.g. a leaf spring and a rod assembly.

There are provided identification means 7 for identifying an individual animal. In the embodiment shown the identification means 7 are disposed in the partitions 4, but it will be obvious that the identification means may also be disposed at other places, such as e.g. the feeding troughs 6. With the aid of the identification means 7 the identity of an animal present at a feeding trough 6 is determined automatically. With the aid of correspondence tables stored in the memory of e.g. the computer, it is possible to supply e.g. the amount of feed intended for that animal. Said amount may be determined with the aid of the weighing device 20. With the aid of data from the animal identification means 7 the computer further controls the movement of the tube-shaped chute 3 so that the latter is located over the right feeding trough 6. The computer further controls the drive of the conveyors 11.

For the purpose of giving animals of different heights access to a feeding trough 6 in a simple manner, the height of a feeding trough 6 relative to the bottom 5 is adjustable. To that end a feeding trough may be disposed on the framework 1 so as to be movable in height, said movement being realised by e.g. a motor controlled by the computer 25. For controlling the motor for moving the feeding troughs in height, the computer 25 may use data from the animal recognition respectively the animal identification means 7.

Alternatively the floor portion 8 of the bottom 5 may be moved upwards or downwards by means of a lifting device 28. A raised floor portion 8, even when it is constituted by a permanently raised floor portion 8, has the advantage that the cow has not to stand unnecessarily in excrement. Especially for that purpose the floor portion 8 slopes downwards in a direction facing away from the device, as schematically shown in Figure 1.

When the device according to the invention is suitable for feeding calves, or other animals that are growing, it is advantageous when there is provided an animal height measuring means for measuring the height of an animal. Such an animal height measuring means may e.g. be constituted by a camera or a light grid. In Figure 1 there are provided measuring strips 29 (or sensors in the form of strips) which may be used for height measurement, and possibly for the control of the mutual height adjustment of feeding trough and floor portion.

The information from the height measuring means 29 may also be used for controlling a feed metering device supplying feed in metered portions partially with the aid of data from the animal identification device 7 and feeding data stored in the computer 25. In this situation also the information from an animal weighing device, e.g. a floor portion designed as a weighing floor. For that purpose the animal height measuring means and the weighing means comprise a data conveying means for conveying measurement data to the computer. The computer is provided with a memory containing average growth data for the animal species, preferably in the form of correspondence tables, in relation to weight in dependence of age, and/or in relation to height in dependence of age, and/or in relation to the amount of feed per day per animal in dependence of age, and/or historical growth data of an animal, the feed metering device supplying feed in metered portions with the aid of at least one of said data.

Although, in particular with the device as shown in Figure 1, in which several feeding troughs 6 are disposed around the central axis 2, this seems illogical on first thoughts because the space available for feeding troughs on the contrary decreases towards the axis, a feeding trough having a shape that widens from the entrance opening thereof towards the central axis 2, appears to have enormous, unexpected advantages in relation to the feed intake of animals. In this situation the degree of widening is especially such that the front part of the head of the cow has relatively much lateral freedom, and the entrance opening is just large enough to allow the passage of the head.

The invention is not limited to the above-described embodiments, but it will be obvious that supplements and modifications within the scope of the claims are possible. The device may e.g. be provided with a lighting disposed behind a feeding trough, preferably a central lighting for all feeding troughs. Besides, the device may be provided with means for combating vermin, and/or means for preventing the formation of condensation in the device, and/or means for cooling an animal. Especially when the device is used by dairy animals, it has appeared to be advantageous when the device is provided with means for giving the animal a signal indicating that the animal is expected at a milking robot. Consequently, the invention also relates to each of the mentioned embodiments per se. A partition frame may e.g. also be applied independently of the upward conveyance of feed in the hoppers.

## Claims

1. A device for supplying feed to animals, such as cows, said device being provided with a feeding trough (6) which is accessible to an animal, with a bottom (5) having a floor portion (8) on which an animal stands while feeding, and with identification means (7) for identifying an individual animal, **characterized by** means to automatically adjust the distance in height between the feeding trough (6) and the floor portion (8) with the aid of data from the identification means (7) to accommodate animals having different heights.

2. A device for supplying feed to animals, such as cows, said device being provided with a feeding trough (6), which is accessible to an animal and with identification means (7) for identifying an individual animal, **characterized by** means to automatically adjust the height of the feeding trough (6), with respect to a floor portion (8) on which an animal stands while feeding, with the aid of data from the identification means (7).

3. A device as claimed in claim 1 , **characterized in that** the device is provided with adjusting means (28) for adjusting the orientation of the floor portion (8) relative to the bottom (5), and with means for locking the floor portion (8) in an adjusted position.

4. A device as claimed in claim 3, **characterized in that** the adjusting means (28) for adjusting the orientation of the floor portion (8) relative to the bottom (5) are integrated into the floor portion.

5. A device as claimed in claim 3 or 4, **characterized in that** the adjusting means (28) is controlled with the aid of data from the identification means (7).

6. A device according to any preceding claim, **characterized in that** the identification means comprises a measuring means (29) for measuring the height of an animal.

7. A device as claimed in claim 6, **characterized in that** the height is adjusted with the aid of data from the measuring means (29).

8. A device as claimed in claim 6 or 7, **characterized in that** the measurement data are stored for determining the growth of an animal and/or for attuning the fodder and/or drink supply.

9. A device as claimed in any one of the preceding claims, **characterized in that** the device is provided with a hopper (9, 10) for containing a stock of feed, and with conveying means (3, 3'; 11; 18) for conveying feed from the hopper (9, 10) to the feeding trough (6).

10. A device as claimed in claim 9, **characterized in that** the conveying means comprise a first conveyor (11) for conveying feed upwards from a hopper (9, 10), the first conveyor (11) having a supply end for supplying feed to be conveyed to the feeding trough (6).

11. A device as claimed in claim 10, **characterized in that** the device is provided with a receptacle (12), the first conveyor (11) conveying an amount of feed from the hopper (9, 10) to the receptacle (12).

12. A device as claimed in claim 10 or 11, **characterized in that** the receptacle (12) is provided with a weighing device (20) for measuring feed present in the receptacle (12).

13. A device as claimed in claim 11 or 12, **characterized in that** the receptacle (12) has a bottom which is adapted to be opened.

14. A device as claimed in claim 13, **characterized in that** there is provided a control means for controlling the opening of the bottom of the receptacle (12).

15. A device as claimed in any one of the preceding claims 9 through 14, **characterized in that** the conveying means comprise a second conveyor (3, 3') for conveying the amount of feed from the receptacle (12) to the feeding trough (6).

16. A device as claimed in claim 15, **characterized in that** the second conveyor (3, 3') is constituted by a tube-shaped chute respectively a channel-shaped chute.

17. A device as claimed in any one of the preceding claims, **characterized in that** the device comprises a plurality of hoppers (9, 10), said hoppers (9, 10) being disposed on a framework (1) which is located around a central axis (2).

18. A device as claimed in claim 17, **characterized in that** each hopper (9, 10) has a discharge end (21, 22), a discharge end (21, 22) corresponding with the relevant supply end of the first conveyor (11).

19. A device as claimed in claim 18, **characterized in that** the discharge ends (21, 22) of the hoppers (9, 10) alternately stagger in height, the arrangement being such that the discharge ends (21, 22) of juxtaposed hoppers (9, 10) partially overlap each other in a projective view.

20. A device as claimed in any one of the preceding claims, **characterized in that** the device is provided with a plurality of feeding troughs (6) disposed on a framework (1) which is located around a central axis (2).

21. A device as claimed in claim 20, **characterized in that** a first number of the feeding troughs (6) is disposed on the framework (1) in a lower position than a second number of the feeding troughs (6).

22. A device as claimed in claim 21, **characterized in that** above at least one of the feeding troughs (6) of the first number there is provided a third conveyor (18) for conveying feed from the second conveyor (3, 3') to the feeding trough (6).

23. A device as claimed in claim 22, **characterized in that** the third conveyor (18) is disposed so as to be rotatable around the central axis (2).

24. A device as claimed in claim 15, 16 or 22, **characterized in that** the second conveyor (3, 3') is disposed so as to be rotatable around the central axis (2).

25. A device as claimed in claim 22 or 23, **characterized in that** the third conveyor (18) is constituted by a tube-shaped chute respectively a channel-shaped chute.

26. A device as claimed in any one of the preceding claims 21 through 25, with reference to claim 20, **characterized in that** there is disposed a partition (4) between two adjacent feeding troughs (6).

27. A device as claimed in claim 26, **characterized in that** in the partition (4) there is disposed a reading device (13) for a step counter.

28. A device as claimed in any one of the preceding claims, **characterized in that** the device is provided with at least one partition frame (14) extending from a feeding trough (6) over a distance that equals at least approximately half of the average length of an animal.

29. A device as claimed in claim 28, **characterized in that** the partition frame (14) is made of stainless steel.

30. A device as claimed in any one of the preceding claims, **characterized in that** the feeding trough (6) has an entrance opening for the head of an animal, the feeding trough (6) having a shape that widens from the entrance opening.

31. A device as claimed in any one of the preceding claims, **characterized in that** the device is provided with a lighting disposed behind a feeding trough (6).

32. A device as claimed in any one of the preceding claims, **characterized in that** the device is provided with means for combating vermin.

33. A device as claimed in any one of the preceding claims, **characterized in that** the device is provided with means for preventing the formation of condensation in the device.

34. A device as claimed in any one of the preceding claims, **characterized in that** the device is provided with means for cooling an animal.

35. A device as claimed in any one of the preceding claims, **characterized in that** the device is provided with means for giving the animal a signal, in particular a signal indicating that the animal is expected at a milking robot.

36. A device as claimed in any one of the preceding claims, **characterized in that** the bottom (5) slopes downwards in a direction away from the device.

37. A device as claimed in any one of the preceding claims, **characterized in that** the bottom (5) has a raised portion (8) on which the animal can stand.

## Patentansprüche

1. Vorrichtung zum Zuführen von Futter zu Tieren, wie z. B. Kühen, wobei die Vorrichtung versehen ist mit einem für ein Tier zugänglichen Futtertrog (6), mit einem Boden (5) mit einem Bodenteil (8), auf dem ein Tier beim Fressen stehen kann, und mit einer Identifikationsvorrichtung (7) zum Identifizieren eines einzelnen Tieres,
**gekennzeichnet durch** eine Vorrichtung zum automatischen Einstellen des Abstandes in vertikaler Richtung zwischen dem Futtertrog (6) und dem Bodenteil (8) mit Hilfe von Daten von der Identifikationsvorrichtung (7), um Tiere von unterschiedlicher Höhe aufzunehmen.

2. Vorrichtung zum Zuführen von Futter zu Tieren, wie z. B. Kühen, wobei die Vorrichtung mit einem für ein Tier zugänglichen Futtertrog (6) und mit einer Identifikationsvorrichtung (7) zum Identifizieren eines einzelnen Tieres versehen ist,
**gekennzeichnet durch** eine Vorrichtung zum automatischen Einstellen der Höhe des Futtertroges (6) relativ zu einem Bodenteil (8), auf dem ein Tier beim Fressen steht, mit Hilfe von Daten von der Identifikationsvorrichtung (7).

3. Vorrichtung nach Anspruch 1,
**dadurch gekennzeichnet, dass** die Vorrichtung mit einer Einstellvorrichtung (28) zum Einstellen der Ausrichtung des Bodenteiles (8) relativ zu dem Boden (5) sowie mit einer Vorrichtung zum Verriegeln des Bodenteiles (8) in einer eingestellten Position versehen ist.

4. Vorrichtung nach Anspruch 3,
**dadurch gekennzeichnet, dass** die Einstellvorrichtung (28) zum Einstellen der Ausrichtung des Bodenteiles (8) relativ zu dem Boden (5) in den Bodenteil integriert ist.

5. Vorrichtung nach Anspruch 3 oder 4,
**dadurch gekennzeichnet, dass** die Einstellvorrichtung (28) mit Hilfe von Daten von der Identifikationsvorrichtung (7) gesteuert wird.

6. Vorrichtung nach einem der vorhergehenden Ansprüche,
**dadurch gekennzeichnet, dass** die Identifikationsvorrichtung eine Messvorrichtung (29) zum Messen der Höhe eines Tieres umfasst.

7. Vorrichtung nach Anspruch 6,
**dadurch gekennzeichnet, dass** die Höhe mit Hilfe von Daten von der Messvorrichtung (29) eingestellt wird.

8. Vorrichtung nach Anspruch 6 oder 7,
**dadurch gekennzeichnet, dass** die Messdaten gespeichert werden, um das Wachstum eines Tieres zu ermitteln und/oder die Zufuhr von Futter und/oder Trinkflüssigkeit abzustimmen.

9. Vorrichtung nach einem der vorhergehenden Ansprüche,
**dadurch gekennzeichnet, dass** die Vorrichtung mit einem Vorratsbehälter (9, 10) zur Aufnahme eines Futtervorrates sowie mit einer Fördervorrichtung (3, 3'; 11; 18) zum Fördern von Futter aus dem Vorratsbehälter (9, 10) zu dem Futtertrog (6) versehen ist.

10. Vorrichtung nach Anspruch 9,
**dadurch gekennzeichnet, dass** die Fördervorrichtung einen ersten Förderer (11) zum Fördern von Futter aus einem Vorratsbehälter (9, 10) nach oben umfasst, wobei der erste Förderer (11) ein Zuführende zum Zuführen von Futter aufweist, das zum Futtertrog (6) zu fördern ist.

11. Vorrichtung nach Anspruch 10,
**dadurch gekennzeichnet, dass** die Vorrichtung mit einem Behälter (12) versehen ist, wobei der erste Förderer (11) eine Futtermenge von dem Vorratsbehälter (9, 10) zu dem Behälter (12) fördert.

12. Vorrichtung nach Anspruch 10 oder 11,
**dadurch gekennzeichnet, dass** der Behälter (12) mit einer Wiegevorrichtung (20) zum Messen von in dem Behälter (12) befindlichem Futter versehen ist.

13. Vorrichtung nach Anspruch 11 oder 12,
**dadurch gekennzeichnet, dass** der Behälter (12) einen Boden hat, der geöffnet werden kann.

14. Vorrichtung nach Anspruch 13,
**dadurch gekennzeichnet, dass** eine Steuervorrichtung vorhanden ist, um das Öffnen des Bodens des Behälters (12) zu steuern.

15. Vorrichtung nach einem der vorhergehenden Ansprüche 9 bis 14,
**dadurch gekennzeichnet, dass** die Fördervorrichtung einen zweiten Förderer (3, 3') umfasst, um die Futtermenge von dem Behälter (12) zu dem Futtertrog (6) zu fördern.

16. Vorrichtung nach Anspruch 15,
**dadurch gekennzeichnet, dass** der zweite Förderer (3, 3') durch einen rohrförmigen Schacht bzw. einen kanalförmigen Schacht gebildet ist.

17. Vorrichtung nach einem der vorhergehenden Ansprüche,
**dadurch gekennzeichnet, dass** die Vorrichtung mehrere Vorratsbehälter (9, 10) umfasst, wobei die Vorratsbehälter (9, 10) an einem Rahmen (1) angebracht sind, der um eine Mittelachse (2) herum angeordnet ist.

18. Vorrichtung nach Anspruch 17,
**dadurch gekennzeichnet, dass** jeder Vorratsbehälter (9, 10) ein Auslassende (21, 22) aufweist, wobei ein Auslassende (21, 22) dem jeweiligen Zuführende des ersten Förderers (11) entspricht.

19. Vorrichtung nach Anspruch 18,
**dadurch gekennzeichnet, dass** die Auslassenden (21, 22) der Vorratsbehälter (9, 10) abwechselnd höhenversetzt zueinander angeordnet sind, wobei die Anordnung so getroffen ist, dass sich die Auslassenden (21, 22) von nebeneinander angeordneten Vorratsbehältern (9, 10) in projektiver Ansicht teilweise überlappen.

20. Vorrichtung nach einem der vorhergehenden Ansprüche,
**dadurch gekennzeichnet, dass** die Vorrichtung mit mehreren Futtertrögen (6) versehen ist, die an einem Rahmen (1) angebracht sind, der um eine Mittelachse (2) herum angeordnet ist.

21. Vorrichtung nach Anspruch 20,
**dadurch gekennzeichnet, dass** eine erste Anzahl von Futtertrögen (6) an dem Rahmen (1) in einer niedrigeren Position angeordnet ist als eine zweite Anzahl von Futtertrögen (6).

22. Vorrichtung nach Anspruch 21,
**dadurch gekennzeichnet, dass** über mindestens einem der Futtertröge (6) der ersten Anzahl ein dritter Förderer (18) angeordnet ist, um Futter von dem zweiten Förderer (3, 3') zu dem Futtertrog (6) zu fördern.

23. Vorrichtung nach Anspruch 22,
**dadurch gekennzeichnet, dass** der dritte Förderer (18) derart angeordnet ist, dass er um die Mittelachse (2) drehbar ist.

24. Vorrichtung nach Anspruch 15, 16 oder 22,
**dadurch gekennzeichnet, dass** der zweite Förderer (3, 3') derart angeordnet ist, dass er um die Mittelachse (2) drehbar ist.

25. Vorrichtung nach Anspruch 22 oder 23,
**dadurch gekennzeichnet, dass** der dritte Förderer (18) durch einen rohrförmigen Schacht bzw. einen kanalförmigen Schacht gebildet ist.

26. Vorrichtung nach einem der vorhergehenden Ansprüche 21 bis 25 unter Rückbezug auf Anspruch 20,
**dadurch gekennzeichnet, dass** zwischen zwei benachbarten Futtertrögen (6) eine Trennwand (4) angeordnet ist.

27. Vorrichtung nach Anspruch 26,
**dadurch gekennzeichnet, dass** in der Trennwand (4) eine Lesevorrichtung (13) für einen Schrittzähler angeordnet ist.

28. Vorrichtung nach einem der vorhergehenden Ansprüche,
**dadurch gekennzeichnet, dass** die Vorrichtung mit mindestens einem Trennrahmen (14) versehen ist, der sich von einem Futtertrog (6) über eine Distanz erstreckt, die zumindest annähernd gleich der halben durchschnittlichen Länge eines Tieres ist.

29. Vorrichtung nach Anspruch 28,
**dadurch gekennzeichnet, dass** der Trennrahmen (14) aus rostfreiem Stahl hergestellt ist.

30. Vorrichtung nach einem der vorhergehenden Ansprüche,
**dadurch gekennzeichnet, dass** der Futtertrog (6) eine Zugangsöffnung für den Kopf eines Tieres hat, wobei der Futtertrog (6) eine sich von der Zugangsöffnung aus verbreiternde Form aufweist.

31. Vorrichtung nach einem der vorhergehenden Ansprüche,
**dadurch gekennzeichnet, dass** die Vorrichtung mit einer Beleuchtung versehen ist, die hinter einem Futtertrog (6) angeordnet ist.

32. Vorrichtung nach einem der vorhergehenden Ansprüche,
**dadurch gekennzeichnet, dass** die Vorrichtung mit einer Vorrichtung zur Bekämpfung von Schädlingen versehen ist.

33. Vorrichtung nach einem der vorhergehenden Ansprüche,
**dadurch gekennzeichnet, dass** die Vorrichtung mit einer Vorrichtung zur Verhinderung der Bildung von Kondenswasser in der Vorrichtung versehen ist.

34. Vorrichtung nach einem der vorhergehenden Ansprüche,
**dadurch gekennzeichnet, dass** die Vorrichtung mit einer Vorrichtung zum Kühlen eines Tieres versehen ist.

35. Vorrichtung nach einem der vorhergehenden Ansprüche,
**dadurch gekennzeichnet, dass** die Vorrichtung mit einer Vorrichtung versehen ist, um dem Tier ein Signal zu geben, insbesondere ein Signal, das anzeigt, dass das Tier in einem Melkroboter erwartet wird.

36. Vorrichtung nach einem der vorhergehenden Ansprüche,
**dadurch gekennzeichnet, dass** der Boden (5) in von der Vorrichtung abgewandter Richtung schräg nach unten geneigt ist.

37. Vorrichtung nach einem der vorhergehenden Ansprüche,
**dadurch gekennzeichnet, dass** der Boden (5) einen erhöhten Teil (8) aufweist, auf dem das Tier stehen kann.

## Revendications

1. Dispositif de distribution de nourriture à des animaux, tels que des vaches, ledit dispositif étant muni d'une auge (6) qui est accessible à un animal, d'un fond (5) ayant une partie de plancher (8) sur laquelle un animal peut se tenir pendant qu'il est alimenté, et de moyens d'identification (7) pour identifier individuellement un animal, **caractérisé par** des moyens destinés à régler automatiquement la distance en hauteur entre l'auge (6) et la partie de plancher (8) à l'aide de données provenant des moyens d'identification (7) pour s'adapter à des animaux ayant des hauteurs différentes.

2. Dispositif de distribution de nourriture à des animaux, tels que des vaches, ledit dispositif étant muni d'une auge (6) qui est accessible à un animal et de moyens d'identification (7) pour identifier un animal individuel, **caractérisé par** des moyens destinés à régler automatiquement la hauteur de l'auge (6) par rapport à la partie de plancher (8) sur laquelle se tient un animal pendant qu'il est alimenté, à l'aide de données provenant des moyens d'identification (7).

3. Dispositif selon la revendication 1, **caractérisé en ce que** le dispositif est muni de moyens de réglage (28) destinés à régler l'orientation de la partie de plancher (8) par rapport au fond (5), et de moyens destinés à bloquer la partie de plancher (8) dans une position réglée.

4. Dispositif selon la revendication 3, **caractérisé en ce que** les moyens de réglage (28) destinés à régler l'orientation de la partie de plancher (8) par rapport au fond (5) sont intégrés dans la partie de plancher.

5. Dispositif selon la revendication 3 ou 4, **caractérisé en ce que** les moyens de réglage (28) sont commandés à l'aide de données provenant des moyens d'identification (7).

6. Dispositif selon l'une quelconque des revendications précédentes, **caractérisé en ce que** les moyens d'identification comprennent des moyens de mesure (29) destinés à mesurer la hauteur d'un animal.

7. Dispositif selon la revendication 6, **caractérisé en ce que** la hauteur est réglée à l'aide de données provenant des moyens de mesure (29).

8. Dispositif selon la revendication 6 ou 7, **caractérisé en ce que** les données de mesure sont stockées pour déterminer la croissance d'un animal et/ou pour régler la distribution de fourrage et/ou de boisson.

9. Dispositif selon l'une quelconque des revendications précédentes, **caractérisé en ce que** le dispositif est muni d'une trémie (9, 10) destinée à contenir un stock de nourriture, et de moyens de convoyage (3, 3', 11, 18) destinés à acheminer de la nourriture depuis la trémie (9, 10) jusqu'à l'auge (6).

10. Dispositif selon la revendication 9, **caractérisé en ce que** les moyens de convoyage comprennent un premier convoyeur (11) destiner à acheminer de la nourriture vers le haut depuis une trémie (9, 10), le premier convoyeur (11) ayant une extrémité de distribution pour distribuer de la nourriture à acheminer vers l'auge (6).

11. Dispositif selon la revendication 10, **caractérisé en ce que** le dispositif est muni d'un réceptacle (12), le premier convoyeur (11) acheminant une quantité de nourriture depuis la trémie (9, 10) jusqu'au réceptacle (12).

12. Dispositif selon la revendication 10 ou 11, **caractérisé en ce que** le réceptacle (12) est muni d'un dispositif de pesage (20) destiné à mesurer la nourriture présente dans le réceptacle (12).

13. Dispositif selon la revendication 11 ou 12, **caractérisé en ce que** le réceptacle (12) comporte un fond qui est adapté pour être ouvert.

14. Dispositif selon la revendication 13, **caractérisé en ce qu'**un moyen de commande est prévu pour commander l'ouverture du fond du réceptacle (12).

15. Dispositif selon l'une quelconque des revendications précédentes 9 à 14, **caractérisé en ce que** les moyens de convoyage comprennent un deuxième convoyeur (3, 3') destiné à convoyer la quantité de nourriture depuis le réceptacle (12) jusqu'à l'auge (6).

16. Dispositif selon la revendication 15, **caractérisé en ce que** le deuxième convoyeur (3, 3') est constitué d'une goulotte en forme de tube et respectivement d'une goulotte en forme de canal.

17. Dispositif selon l'une quelconque des revendications précédentes, **caractérisé en ce que** le dispositif comprend une pluralité de trémies (9, 10) lesdites trémies (9, 10) étant disposées sur un châssis (1) qui est positionné autour d'un axe central (2).

18. Dispositif selon la revendication 17, **caractérisé en ce que** chaque trémie (9, 10) comporte une extrémité d'évacuation (21, 22), une extrémité d'évacuation (21, 22) correspondant à l'extrémité de distribution correspondante du premier convoyeur (11).

19. Dispositif selon la revendication 18, **caractérisé en ce que** les extrémités d'évacuation (21, 22) des trémies (9, 10) sont étagées en alternance du point de vue de la hauteur, l'agencement étant tel que, vues en projection, les extrémités d'évacuation (21, 22) de trémies (9, 10) juxtaposées se chevauchent partiellement.

20. Dispositif selon l'une quelconque des revendications précédentes, **caractérisé en ce que** le dispositif est muni d'une pluralité d'auges (6) disposées sur un châssis (1) qui est positionné autour d'un axe central (2).

21. Dispositif selon la revendication 20, **caractérisé en ce qu'**un premier ensemble d'auges (6) est disposé sur le châssis (1) dans une position inférieure à celle d'un deuxième ensemble d'auges (6).

22. Dispositif selon la revendication 21, **caractérisé en ce que** au-dessus d'au moins une des auges (6) du premier ensemble un troisième convoyeur (18) est prévu pour acheminer de la nourriture depuis le deuxième convoyeur (3, 3') jusqu'à l'auge (6).

23. Dispositif selon la revendication 22, **caractérisé en ce que** le troisième convoyeur (18) est disposé de manière à pouvoir tourner autour de l'axe central (2).

24. Dispositif selon la revendication 15, 16 ou 22, **caractérisé en ce que** le deuxième convoyeur (3, 3') est disposé de manière à pouvoir tourner autour de l'axe central (2).

25. Dispositif selon la revendication 22 ou 23, **caractérisé en ce que** le troisième convoyeur (18) est constitué d'une goulotte en forme de tube et respectivement d'une goulotte en forme de canal.

26. Dispositif selon l'une quelconque des revendications précédentes 21 à 25, en référence à la revendication 20, **caractérisé en ce qu'**une cloison (4) est disposée entre deux auges (6) adjacentes.

27. Dispositif selon la revendication 26, **caractérisé en ce qu'**un dispositif de lecture (13) pour un compteur de pas est disposé dans la cloison (4).

28. Dispositif selon l'une quelconque des revendications précédentes, **caractérisé en ce que** le dispositif est muni d'au moins un cadre de séparation (14) s'étendant depuis une auge (6) sur une distance égalant approximativement au moins la moitié de la longueur moyenne d'un animal.

29. Dispositif selon la revendication 28, **caractérisé en ce que** le cadre de séparation (14) est fait d'acier inoxydable.

30. Dispositif selon l'une quelconque des revendications précédentes, **caractérisé en ce que** l'auge (6) comporte une ouverture d'entrée pour la tête d'un animal, l'auge (6) ayant une forme qui s'élargit à partir de l'ouverture d'entrée.

31. Dispositif selon l'une quelconque des revendications précédentes, **caractérisé en ce que** le dispositif est muni d'un éclairage disposé derrière une auge (6).

32. Dispositif selon l'une quelconque des revendications précédentes, **caractérisé en ce que** le dispositif est muni de moyens destinés à combattre la vermine.

33. Dispositif selon l'une quelconque des revendications précédentes, **caractérisé en ce que** le dispositif est muni de moyens destinés à empêcher la formation de condensation dans le dispositif.

34. Dispositif selon l'une quelconque des revendications précédentes, **caractérisé en ce que** le dispositif est muni de moyens destinés à rafraîchir un animal.

35. Dispositif selon l'une quelconque des revendications précédentes, **caractérisé en ce que** le dispositif est muni de moyens destinés à transmettre à l'animal un signal, en particulier un signal indiquant que l'animal est attendu à un robot trayeur.

36. Dispositif selon l'une quelconque des revendications précédentes, **caractérisé en ce que** le fond (5) est incliné vers le bas dans un sens s'éloignant du dispositif.

37. Dispositif selon l'une quelconque des revendications précédentes, **caractérisé en ce que** le fond (5) comporte une partie surélevée (8) sur laquelle l'animal peut se tenir.
